(19) Europäisches Patentamt
European Patent Office
Office européen des brevets

(11) EP 2 805 761 B1

(12) **EUROPEAN PATENT SPECIFICATION**

(45) Date of publication and mention of the grant of the patent:
**17.06.2020 Bulletin 2020/25**

(21) Application number: **13738354.3**

(22) Date of filing: **16.01.2013**

(51) Int Cl.:
***B01D 69/12*** *(2006.01)* ***B01D 69/10*** *(2006.01)*
***B01D 71/56*** *(2006.01)* ***B32B 5/18*** *(2006.01)*
***C08J 9/28*** *(2006.01)* *B01D 71/68 (2006.01)*
*B01D 69/02 (2006.01)*

(86) International application number:
**PCT/JP2013/050683**

(87) International publication number:
**WO 2013/108788 (25.07.2013 Gazette 2013/30)**

(54) **COMPOSITE SEMIPERMEABLE MEMBRANE AND METHOD FOR MANUFACTURING SAME**

SEMIPERMEABLE VERBUNDMEMBRAN UND HERSTELLUNGSVERFAHREN DAFÜR

MEMBRANE SEMI-PERMÉABLE COMPOSITE ET SON PROCÉDÉ DE FABRICATION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **16.01.2012 JP 2012005879**
**30.03.2012 JP 2012079365**

(43) Date of publication of application:
**26.11.2014 Bulletin 2014/48**

(73) Proprietor: **Toray Industries, Inc.**
**Tokyo 103-8666 (JP)**

(72) Inventors:
- **OKABE Jun**
  **Otsu-shi**
  **Shiga 520-8558 (JP)**
- **MARUTANI Yoshie**
  **Otsu-shi**
  **Shiga 520-8558 (JP)**
- **TAKAYA Kiyohiko**
  **Otsu-shi**
  **Shiga 520-8558 (JP)**
- **SHIMURA Harutoki**
  **Otsu-shi**
  **Shiga 520-8558 (JP)**
- **SASAKI Takao**
  **Otsu-shi**
  **Shiga 520-8558 (JP)**
- **KIMURA Masahiro**
  **Otsu-shi**
  **Shiga 520-8558 (JP)**

(74) Representative: **Hoefer & Partner Patentanwälte mbB**
**Pilgersheimer Straße 20**
**81543 München (DE)**

(56) References cited:
**EP-A1- 1 064 986** **EP-A1- 2 695 670**
**EP-A2- 0 718 030** **WO-A2-01/89673**
**JP-A- H0 985 068** **JP-A- H0 985 068**
**JP-A- H03 270 721** **JP-A- 2001 179 061**
**JP-A- 2001 252 538** **JP-A- 2005 169 332**
**JP-A- 2005 169 332** **JP-A- 2006 142 275**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 805 761 B1

## Description

TECHNICAL FIELD

The present invention relates to a composite semipermeable membrane useful for selective separation of a liquid mixture and a method for producing the same. The composite semipermeable membrane obtained by the invention can be suitably used, for example, for desalination of seawater or brackish water.

BACKGROUND ART

With respect to separation of mixtures, there are various techniques for removing substances (for example, salts) dissolved in solvents (for example, water), and in recent years, the use of a membrane separation process has been expanding as a process for energy saving and resource saving. Examples of membranes used in the membrane separation process include a microfiltration membrane, an ultrafiltration membrane, a nanofiltration membrane, a reverse osmosis membrane and the like, and these membranes have been used in the case of obtaining drinking water, for example, from seawater, brackish water and harmful substance-containing water, and in the production of industrial ultrapure water, wastewater treatment, recovery of valuables and the like.

Most of the reverse osmosis membranes and nanofiltration membranes that are commercially available at present are composite semipermeable membranes, and there are two types thereof: one having a gel layer and an active layer obtained by crosslinking a polymer, on a supporting membrane; and one having an active layer obtained by polycondensing a monomer on a supporting membrane. Above all, a composite semipermeable membrane obtained by coating a supporting membrane with a separation functional layer including a cross-linked polyamide obtained by polycondensation reaction of a multifunctional amine with a multifunctional acyl halide has been widely used as a separation membrane having high water permeability and salt removal performance (Patent Documents 1 and 2).

In water production plants using the reverse osmosis membranes, higher water permeability is required, in order to further reduce running cost. Further, when the composite semipermeable membranes are used as the reverse osmosis membranes, it is required to maintain the above-mentioned membrane performance even in long-term operation under high pressure.

Factors having influences on the performance of the composite semipermeable" membrane include a projection structure formed on a polyamide surface. With respect to the relationship between the membrane performance and the projection structure, it is proposed to increase the substantial membrane area by elongating projections, thereby improving water permeability (Patent Documents 3, 4 and 5). On the other hand, as methods for increasing salt removal performance, there are also proposed a method of decreasing the diameter of a horizontal equivalent circle viewed from an upper surface of a projection (Patent Document 6) and a method of controlling the pitch and aspect ratio of projections (Patent Document 7) EP1064986 describes a composite semipermeable membrane with an asymmetric porous support layer. EP2695670 describes a composite semipermeable membrane in which a polyamide separation functional layer is formed on a porous support membrane.

BACKGROUND ART DOCUMENT

PATENT DOCUMENT

Patent Document 1: JP-A-55-14706

Patent Document 2: JP-A-5-76740

Patent Document 3: JP-A-9-19630

Patent Document 4: JP-A-9-85068

Patent Document 5: JP-A-2001-179061

Patent Document 6: JP-A-9-141071

Patent Document 7: JP-A-2005-169332

## SUMMARY OF THE INVENTION

### PROBLEMS THAT THE INVENTION IS TO SOLVE

As described above, high salt removal performance and water permeability can be imparted by changing the projection structure. However, the size of the projections tends to become uneven. For example, when there are excessively large projections, the projections are crushed in use under high pressure, which sometimes causes deterioration of salt removal performance or water permeability. An object of the invention is to solve these problems and to provide a composite semipermeable membrane in which salt removal performance and water permeability are compatible with each other.

### MEANS FOR SOLVING THE PROBLEMS

In order to solve the above-mentioned problem, a composite semipermeable membrane of the invention is a composite semipermeable membrane as defined in claim 1 including: a supporting membrane having a substrate and a porous supporting layer; and a separation functional layer provided on the supporting membrane, in which, when any 10 cross sections of the composite semipermeable membrane, having a length of 2.0 μm in a membrane surface direction, are observed using an electron microscope, an average number density of projections on the separation functional layer, which have a height equivalent to or higher than 1/5 of a 10-point average surface roughness of the separation functional layer, is 10.0 pieces/μm or more, in each cross section, and an average height of the projections is 100 nm or more.

The above-mentioned composite semipermeable membrane can be produced by a method as defined in the claims including the following steps (a) to (c):

(a) applying a polymer solution on a substrate;
(b) impregnating the polymer solution in the substrate and thereafter bringing the polymer solution into contact with a coagulation bath, thereby forming a porous supporting layer in which 10 to 90% by weight thereof is impregnated in the substrate, by phase separation; and
(c) forming a separation functional layer on the porous supporting layer.

### ADVANTAGE OF THE INVENTION

According to the invention, compatibility of high salt removal performance with water permeability in a composite semipermeable membrane is realized.

### BRIEF DESCRIPTION OF THE DRAWINGS

[Fig. 1] Fig. 1 is a cross-sectional schematic diagram (roughness curve) of a composite semipermeable membrane obtained by an electron microscope.

### MODE FOR CARRYING OUT THE INVENTION

#### 1. Composite Semipermeable Membrane

The composite semipermeable membrane includes: a supporting membrane having a substrate and a porous supporting layer; and a separation functional layer provided on the above-mentioned porous supporting layer. The average number density of projections on the above-mentioned separation functional layer is 10.0 pieces/μm or more and the average height of the projections is 100 nm or more.

#### (1-1) Separation Functional Layer

The separation functional layer is a layer that plays a function for separating solutes, in the composite semipermeable membrane. The composition and constitution such as the thickness of the separation functional layer are set in accordance with the intended use of the composite semipermeable membrane.
In general, when the projections (folds) on the separation functional layer are enlarged, water permeability is improved, but salt permeability is also increased. It is considered that high salt removal performance and water permeability can be compatible with each other by enlarging the projections. However, this only shows that salt removal performance is kept at a high state as a result that the amount of water permeated is increased relatively to the amount

of salt permeated, by an increase in water permeability. It does not mean that salt permeability is suppressed. The presence of excessively enlarged projections leads to not only deformation at the time of pressurization but also membrane structure destruction, resulting in deterioration of salt removal performance. In particular, in the case of seawater desalination membranes operated under high pressure, this tendency is liable to appear in performance.

Then, the present inventors have focused on the projection structure on the surface and have intensively studied. As a result, it has been found that high salt removal performance and water permeability can be compatible with each other by precisely controlling the number density and height of projections to form projections having a uniform size.

The projection on the separation functional layer in the invention means a projection having a height equivalent to or higher than 1/5 of the 10-point average surface roughness.

The 10-point average surface roughness is a value obtained by a calculation method as described below. First, a cross section in a direction perpendicular to a membrane surface is observed at the following magnification by an electron microscope. In a cross-sectional image obtained, the surface of the separation functional layer (indicated by reference numeral "1" in Fig. 1) shows up as a curve. With respect to this curve, a roughness curve defined on the basis of ISO 4287: 1997 is determined. Incidentally, an average line is a straight line defined on the basis of ISO 4287: 1997, and a straight line drawn in such a manner that the total area of regions surrounded by the average line and the roughness curve is equal in upper and lower sides of the average line in a measured length. The cross-sectional image is sampled at a width of 2.0 μm in a direction of the average line of the above-mentioned roughness curve (Fig. 1). In the image with a width of 2.0 μm sampled, the heights of peaks of the projections on the separation functional layer and the heights of bottoms are each measured taking the above-mentioned average line as a baseline. With respect to the absolute values of the heights HI to H5 of 5 peaks up to the fifth from the highest peak, the average value is calculated, and with respect to the absolute values of the heights D1 to D5 of 5 bottoms up to the fifth from the deepest bottom, the average value is calculated. Further, the sum of the absolute values of the two average values obtained is calculated. The value thus obtained is the 10-point average surface roughness. In addition, a baseline 2 is drawn parallel in a horizontal direction in Fig. 1 for the purpose of illustration.

The cross section of the separation functional layer can be observed by a scanning electron microscope or a transmission electron microscope. For example, when observed by the scanning electron microscope, a composite semipermeable membrane sample is thinly coated with platinum, platinum-palladium or ruthenium tetroxide, preferably with ruthenium tetroxide, and observed at an accelerating voltage of 3 to 6 kV using a high-resolution field emission scanning electron microscope (UHR-FE-SEM). As the high-resolution field emission scanning electron microscope, there can be used an S-900 type electron microscope manufactured by Hitachi Ltd., or the like. The observation magnification is preferably from 5,000 to 100,000 times, and in order to determine the heights of the projections, it is preferably from 10,000 to 50,000 times. In an electron micrograph obtained, the heights of the projections can be directly measured with a scale or the like, considering the observation magnification.

Further, the average number density of projections is measured as follows. When any 10 cross sections are observed in the composite semipermeable membrane, the above-mentioned projections having a height equivalent to or higher than 1/5 of the 10-point average surface roughness are counted in each cross section. The number density (namely, the number of projections per 1 μm) in each cross section is calculated, and further, the arithmetic average value is calculated from the number densities in the 10 cross sections, thereby obtaining the average number density. Here, each cross section has a width of 2.0 μm in a direction of the average line of the above-mentioned roughness curve.

Further, the average height of projections is measured as follows. When any 10 cross sections are observed in the composite semipermeable membrane, the height is measured with respect to the above-mentioned projections having a height equivalent to or higher than 1/5 of the 10-point average surface roughness in each cross section, and the average height per projection is calculated. Furthermore, based on the calculation result for the 10 cross sections, the arithmetic average is calculated, thereby obtaining the average height. Here, each cross section has a width of 2.0 μm in a direction of the average line of the above-mentioned roughness curve.

The standard deviation of the height of projections is calculated based on the height of projections equivalent to or higher than 1/5 of the 10-point average surface roughness, which is measured in the 10 cross sections, in the same manner as for the average height.

The average number density of the projections on the separation functional layer in the invention is 10.0 pieces/μm or more, and preferably 12.0 pieces/μm or more. Further, the average number density of the projections on the separation functional layer is preferably 50 pieces/μm or less, and more preferably 40 pieces/μm or less. When the average number density is 10.0 pieces/μm or more, the composite semipermeable membrane can obtain sufficient water permeability, and can also suppress the deformation of the projections at the time of pressurization to obtain stable membrane performance. Further, when the average number density is 50 pieces/μm or less, growth of the projections sufficiently occurs to make it possible to easily obtain the composite semipermeable membrane having the desired water permeability.

The average height of the projections on the separation functional layer in the invention is 100 nm or more,

and preferably 110 nm or more. Further, the average height of the projections on the separation functional layer is preferably 1000 nm or less, and more preferably 800 nm or less. When the average height of the projections is 100 nm or more, the composite semipermeable membrane having sufficient water permeability can be easily obtained. Further, when the average height of the projections is 1000 nm or less, stable membrane performance can be obtained without crushing of the projections even at the time of operating the composite semipermeable membrane under high pressure to use.

Furthermore, in the invention, the standard deviation of the projections on the separation functional layer in one cross section is preferably 90 nm or less. When the standard deviation is within this range, the projections having a uniform size can be formed, and stable membrane performance can be obtained even at the time of operating the composite semipermeable membrane under high pressure to use.

The separation functional layer may contain a polyamide as a main component. The polyamide constituting the separation functional layer can be formed by interfacial polycondensation of a multifunctional amine with a multifunctional acyl halide. Here, it is preferred that at least one of the multifunctional amine and the multifunctional acyl halide contains a trifunctional or more functional compound.

Incidentally, in the invention, "X contains Y as a main component" means that Y accounts for 60% by weight or more, 80% by weight or more or 90% by weight or more, of X, and includes a constitution that X contains substantially only Y.

In order to obtain sufficient separation performance and amount of water permeated, the thickness of the polyamide separation functional layer is usually preferably within a range of from 0.01 to 1 μm, and more preferably within a range of from 0.1 to 0.5 μm. The multifunctional amine as used herein means an amine having at least two primary amino groups and/or secondary amino groups in one molecule, in which at least one of the amino groups is a primary amino group. Examples thereof include aromatic multifunctional amines such as phenylenediamine in which two amino groups are bonded to a benzene ring in a positional relationship of any one of the ortho-position, the meta-position and the para-position, xylylenediamine, 1,3,5-triaminobenzene, 1,2,4-triaminobenzene, 3,5-diaminobenzoic acid, 3-aminobenzylamine and 4-aminobenzylamine; aliphatic amines such as ethylenediamine and propylenediamine; and alicyclic multifunctional amines such as 1,2-diaminocyclohexane, 1,4-diaminocyclohexane, 4-aminopiperidine and 4-aminoethylpiperidine. Above all, aromatic multifunctional amines having two to four primary amino groups and/or secondary amino groups in one molecule are preferred, in view of selective separation properties, permeability and heat resistance of the membrane. As such aromatic multifunctional amines, there are suitably used m-phenylenediamine, p-phenylenediamine and 1,3,5-trisminobenzene. Above all, from easy availability and easy handling, it is more preferred to use m-phenylenediamine (hereinafter m-PDA). These multifunctional amines may be used alone, or two or more thereof may be used at the same time. When two or more are used at the same time, the above-mentioned amines may be combined with each other, and the above-mentioned amines may be combined with amines having at least two secondary amino groups in one molecule. Examples of the amines having at least two secondary amino groups in one molecule include piperazine and 1,3-bispiperidylpropane.

The multifunctional acyl halide means an acyl halide having at least two carbonyl halide groups in one molecule. For example, as trifunctional acyl halides, trimesoyl chloride, 1,3,5-cyclohexanetricarbonyl trichloride, 1,2,4-cyclobutanetricarbonyl trichloride and the like may be mentioned, and as bifunctional acyl halides, aromatic bifunctional acyl halides such as biphenyldicarbonyl dichloride, azobenzenedicarbonyl dichloride, terephthaloyl chloride, isophthaloyl chloride and naphthalenedicarbonyl chloride; aliphatic bifunctional acyl halides such as adipoyl chloride and sebacoyl chloride; and alicyclic bifunctional acyl halides such as cyclopentanedicarbonyl dichloride, cyclohexanedicarbonyl dichloride and tetrahydrofurandicarbonyl dichloride may be mentioned. In view of reactivity with the multifunctional amine, the multifunctional acyl halide is preferably a multifunctional acyl chloride. Further, in view of selective separation properties and heat resistance of the membrane, it is more preferred that the multifunctional acyl chloride is a multifunctional aromatic acyl chloride having 2 to 4 carbonyl chloride groups in one molecule. Above all, from the viewpoints of easy availability and easy handling, it is still more preferred to use trimesoyl chloride. These bifunctional acyl halides may be used alone, or two or more thereof may be used at the same time.

(1-2) Supporting Membrane

In the invention, the supporting membrane includes the substrate and the porous supporting layer, substantially does not have separation performance of ions and the like, and imparts strength to the separation functional layer substantially having separation performance.

As materials of the porous supporting layer, homopolymers or copolymers of polysulfone, polyethersulfone, polyamides, polyesters, cellulosic polymers, vinyl polymers, polyphenylene sulfide, polyphenylene sulfide sulfone, polyphenylene sulfone, polyphenylene oxide and the like can be used either alone or as a blend thereof. Here, as the cellulosic polymers, cellulose acetate, cellulose nitrate and the like can be used, and as the vinyl polymers, polyethylene, polypropylene, polyvinyl chloride, polyacrylonitrile and the like can be used. Above all, preferred are homopolymers or

copolymers of polysulfone, polyamides, polyesters, cellulose acetate, cellulose nitrate, polyvinyl chloride, polyacrylonitrile, polyphenylene sulfide, polyphenylene sulfide sulfone, polyphenylene sulfone and the like. More preferably, cellulose acetate, polysulfone, polyphenylene sulfide sulfone or polyphenylene sulfone may be mentioned. Further, of these materials, polysulfone can be generally used because of its high chemical, mechanical and thermal stability and easy moldability.

Specifically, use of polysulfone including a repeating unit shown in the following chemical formula is preferred, because the pore size is easily controllable and the dimensional stability is high.

[Chem. 1]

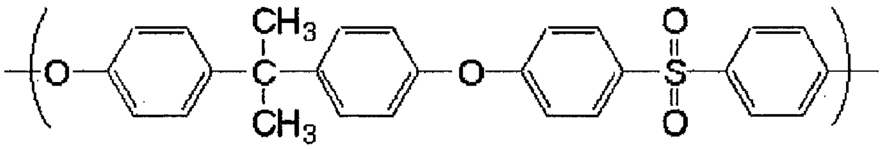

For example, an N,N-dimethylformamide (hereinafter DMF) solution of the above-mentioned polysulfone is cast on a substrate to a specific thickness, and it is wet-coagulated in water, thereby being able to obtain a supporting membrane in which most of a surface has fine pores with a diameter of 1 to 30 nm.

The thickness of the above-mentioned supporting membrane affects strength of the composite semipermeable membrane and filling density at the time when it is used as a membrane element. In order to obtain sufficient mechanical strength and filling density, the thickness thereof is preferably within a range of from 30 to 300 μm, and more preferably within a range of from 50 to 250 μm. Further, the thickness of the porous supporting layer is preferably within a range of from 10 to 200 μm, and more preferably within a range of from 20 to 100 μm. The thickness of the substrate is preferably within a range of from 10 to 250 μm, and more preferably within a range of from 20 to 200 μm. Incidentally, when the porous supporting layer is impregnated in the substrate, the thickness of the above-mentioned porous supporting layer includes the thickness of that portion. Further, the thickness of the above-mentioned substrate indicates the thickness of the whole substrate, and when the porous supporting layer is impregnated in the substrate, it includes the thickness of that portion.

In addition, in this specification, the thickness of each layer and membrane means an average value unless otherwise noted. Here, the average value represents an arithmetic average value. That is to say, the thickness of each layer and membrane is determined by calculating the average value of 20 thickness measurements measured at 20-μm intervals in a direction perpendicular to a thickness direction (in a surface direction of the membrane) by cross-sectional observation.

In the invention, the porous supporting layer has a multilayer structure. The porous supporting layer having the multilayer structure includes two layers, a first layer in contact with the substrate and a second layer in contact with the separation functional layer. The first layer plays a role in transferring a monomer such as an amine necessary for formation of the separation functional layer to a polymerization field. In order to efficiently transfer the monomer, it should have continuous fine pores, and the pore size thereof is from 0.1 μm to 1 μm. The second layer becomes the polymerization field, and retains and releases the monomer, thereby playing a role in supplying the monomer to the separation functional layer to be formed, and also playing a role as a starting point of projection growth. The height and thickness of the projections depend on the monomer retention volume, release rate and supply amount at this time, and the number density of the projections can be controlled by the layer structure. As a result of intensive studies by the present inventors, it has been revealed that the higher stock polymer solution concentration at the time of preparing the supporting membrane results in the denser structure of the porous supporting layer, and that the number density of the projections of the separation functional layer is also increased. Here, for example, the supporting layer prepared by using only a stock solution having a high polymer concentration can form the projections having a high number density. However, the transfer rate of the monomer to the polymerization field is decreased, so that the height of the projections formed is decreased. At this time, the above-mentioned first layer that is the layer having the continuous fine pores is laminated on a substrate side, and this dense layer is laminated as the second layer on the first layer to form the porous supporting layer, thereby being able to cover the transfer rate and being able to form the projections having a uniform size. As described above, in order to control the height, uniformity and number density of the projections at the same time, it is preferred to form the porous supporting layer in which the second layer is laminated on the first layer.

Further, in the porous supporting layer of the invention, an interface between the first layer and the second layer formed thereon preferably has a continuous structure. The continuous structure in the invention means a structure not forming a skin layer in the interface between the first layer and the second layer formed thereon. The skin layer as

used herein means a portion having a high density. Specifically, surface fine pores of the skin layer are within a range of from 1 to 50 nm. When the skin layer is formed in the interface between the first layer and the second layer, high resistance is generated in the porous supporting layer. As a result, when the separation functional layer is formed, the monomer supply rate to the polymerization field is decreased, and the projections to be formed are reduced in size. Accordingly, the permeation flow rate is dramatically decreased.

In the porous supporting layer, a portion accounting for 15% to 50 % by weight thereof is impregnated in the substrate. More preferably, 20% by weight or more thereof is impregnated. In the porous supporting layer, when the weight of the portion impregnated in the substrate is 15 % by weight or more of the weight of the porous supporting layer, separation of the porous supporting layer from the substrate is suppressed, even when the supporting membrane is subjected to a treatment such as hot water cleaning or chemical cleaning. On the other hand, in the porous supporting layer, when the weight of the portion impregnated in the substrate is 50 % by weight or less of the weight of the porous supporting layer, missing portions (defects) of the porous supporting layer are less likely to occur on a surface of the supporting membrane. Accordingly, stable membrane performance is obtained.

As apparent from the above description, the weight of the whole porous supporting layer corresponds to the total of the weight of a portion positioned out of the substrate and the weight of the portion impregnated in the substrate.

That is to say, when the weight of porous supporting layer impregnated in the substrate is within the above-mentioned range, the composite semipermeable membrane having high salt removal performance and pressure resistance can be realized.

In addition, "impregnation" in the invention means a state where the porous supporting layer is impregnated in the substrate. Specifically, when the porous supporting layer is formed of a fibrous material, "impregnation" means a state where the porous supporting layer is impregnated in spaces among fibers of the substrate.

Impregnating ability is a value obtained by a calculation method as described below. In the supporting membrane cut to an arbitrary size, the porous supporting layer is physically separated from the substrate, and the weight of the porous supporting layer is weighed. Further, the substrate separated and the substrate that is insoluble after the substrate is dissolved in a good solvent for the porous supporting layer are weighed, thereby being able to calculate the weight of the porous supporting layer impregnated.

By impregnating the porous supporting layer in the substrate as described above, the substitution rate of solvent with non-solvent is increased at the time of phase separation for forming the porous supporting layer, compared to when the porous supporting layer is not impregnated in the substrate. As a result, in a cross section in a direction perpendicular to a membrane-forming direction (in a membrane width direction), the ratio of the sum of the areas of vacancies (voids) with a major axis of 5 μm or more to the whole cross-sectional area is suppressed low. This ratio is hereinafter referred to as "macrovoid occupancy". The macrovoid occupancy is preferably 10% or less, and more preferably 5% or less. The macrovoid occupancy can be adjusted within this range by impregnation of the porous supporting layer in the substrate. When the macrovoid occupancy is within the above-mentioned range in the porous supporting layer, the supply amount of the monomer at the time of forming the separation functional layer can be controlled, and the projection structure having a small standard deviation can be obtained. Further, when the macrovoid occupancy is low, the occurrence of defects is suppressed even at the time of imparting high pressure, and the salt removal performance and the permeation flow rate are stabilized. Incidentally, the "membrane-forming direction" means a direction in which a membrane-forming stock solution is flow-cast, that is to say, a lengthwise direction of the membrane. In the porous supporting layer, the voids may be communicated with each other.

The macrovoid occupancy can be determined by observing the voids within a range from a boundary with the separation functional layer to a boundary with the substrate in a cross section of the supporting membrane, under a scanning electron microscope or a transmission electron microscope. For example, in the case of a cross-sectional photograph of the scanning electron microscope, a membrane sample is immersed in liquid nitrogen to be frozen, and fractured perpendicularly to the direction in which the membrane-forming stock solution is flow-cast, followed by drying. Thereafter, the membrane cross section is thinly coated with platinum/palladium or ruthenium tetroxide, preferably with ruthenium tetroxide, and observed at an accelerating voltage of 1 to 6 kV under a high-resolution field emission scanning electron microscope. The optimum observation magnification may be any as long as it is a magnification at which the whole membrane cross section from the fine porous surface to the substrate surface can be observed. However, for example, when the membrane thickness of the supporting membrane is 60 μm, it is preferably from 100 to 5,000 times. In order to determine the area of the void, it is preferably from 500 to 2,000 times. The size of the void can be directly measured with a scale or the like from the resulting electron micrograph in view of the observation magnification.

When the void in the supporting membrane cross section, which is observed in the electron micrograph of the supporting membrane cross section, is surrounded by a closed curve, the area of the void is an area surrounded by that curve. When the macrovoid occupancy is determined, specifically, in a 1,000 times membrane cross-sectional photograph by a scanning electron microscope, the outer periphery of every void with a major axis of 5 μm or more is traced to surround the void by the closed curve, thereby determining the area. The ratio of the void area to the cross-sectional area can be determined by the following method. For the areas of the voids, figures of the respective voids each

surrounded by the curve are cut off one by one, and the sum (x) of the areas is measured. Further, the outer periphery of the supporting membrane cross section is traced from the photograph, and a figure thereof is cut off to measure the area (y). The ratio of the sum of the areas of the figures of the above-mentioned voids to the area of the figure of the membrane cross section (x/y×100) is taken as the ratio (%) of the void area to the cross section. The outer periphery of the supporting membrane cross section means the outer periphery of the whole cross section caught by the photograph and to be measured.

Examples of the substrates for constituting the supporting membrane include polyester-based polymers, polyamide-based polymers, polyolefin-based polymers, mixtures or copolymers thereof. However, polyester-based polymers are preferred, because the supporting membrane more excellent in mechanical strength, heat resistance, water resistance and the like is obtained.

The polyester-based polymer used in the invention is a polyester including an acid component and an alcohol component. As the acid components, there can be used aromatic carboxylic acids such as terephthalic acid, isophthalic acid and phthalic acid; aliphatic dicarboxylic acids such as adipic acid and sebacic acid; alicyclic dicarboxylic acids such as cyclohexane dicarboxylic acid, and the like. Further, as the alcohol components, there can be used ethylene glycol, diethylene glycol, polyethylene glycol and the like.

Examples of the polyester-based polymers include polyethylene terephthalate resins, polybutylene terephthalate resins, polytrimethylene terephthalate resins, polyethylene naphthalate resins, polylactic acid resins, polybutylene succinate resins and the like, and also include copolymers of these resins.

As a fabric used for the above-mentioned substrate, a fibrous substrate is preferably used in terms of strength, ruggedness-forming ability and fluid permeability. As the substrate, either of a long-fiber non-woven fabric and a short-fiber non-woven fabric may be preferably used. In particular, the long-fiber non-woven fabric is excellent in permeability at the time when the high molecular weight polymer solution is flow-cast on the substrate, and can suppress the separation of the porous supporting layer, further the formation of the non-uniform membrane due to fluffing of the substrate or the like and the occurrence of defects such as pinholes. Further, the substrate is composed of the long-fiber non-woven fabric constituted by thermoplastic continuous filaments, so that it is possible to suppress the non-uniformity generated by fluffing at the time of flow casting of the polymer solution, which occurs when the short-fiber non-woven fabric is used. Furthermore, in the continuous membrane formation of the separation membrane, tension is applied in the membrane-forming direction, so that it is preferred to use for the substrate the long-fiber non-woven fabric more excellent in dimensional stability. In addition, the above-mentioned substrate is preferably the long-fiber non-woven fabric containing the polyester as a main component.

In the long-fiber non-woven fabric, it is preferred in terms of moldability and strength that fibers in a surface layer on the side opposite to the porous supporting layer are rather lengthwise oriented than fibers in a surface layer on the side of the porous supporting layer. According to such a structure, a high effect of preventing membrane breakage and the like is realized by keeping strength. This is therefore preferred. More specifically, in the above-mentioned long-fiber non-woven fabric, the degree of fiber orientation in the surface layer on the side opposite to the porous supporting layer is preferably from 0° to 25°, and the difference in the degree of orientation from the degree of fiber orientation in the surface layer on the side of the porous supporting layer is preferably from 10° to 90°.

In a production process of the separation membrane or in a production process of an element, a heating step is contained, and there occurs a phenomenon that the porous supporting layer or the separation functional layer is contracted by heating. This is particularly significant in a width direction in which no tension is imparted in the continuous membrane formation. The contraction causes problems in dimensional stability and the like, so that one having a low ratio of thermal dimensional change is desired as the substrate. In the non-woven fabric, when the difference between the degree of fiber orientation in the surface layer on the side opposite to the porous supporting layer and the degree of fiber orientation in the surface layer on the side of the porous supporting layer is from 10° to 90°, it is also possible to suppress changes in the width direction by heat. This is therefore preferred.

The degree of fiber orientation as used herein is an index for indicating a direction of the fibers of the non-woven fabric substrate constituting the porous supporting layer, and means an average angle of the fibers constituting the non-woven fabric substrate at the time when the membrane-forming direction in performing the continuous membrane formation is taken as 0° and when the direction perpendicular to the membrane-forming direction, that is to say, the width direction of the non-woven fabric substrate, is taken as 90°. Accordingly, the degree of fiber orientation closer to 0° indicates the more lengthwise orientation, and the degree of fiber orientation closer to 90° indicates the more lateral orientation.

The degree of fiber orientation is determined by randomly collecting 10 small piece samples from the non-woven fabric, taking photographs of surfaces of the samples at a magnification of 100 to 1,000 times by a scanning electron microscope, measuring angles at the time when the longitudinal direction (lengthwise direction) of the non-woven fabric is taken as 0° and when the width direction (lateral direction) of the non-woven fabric is taken as 90°, for 10 fibers from each sample, a total of 100 fibers, and rounding an average value thereof off to the closest whole number as the degree of fiber orientation.

2. Production Method of Composite Semipermeable Membrane

A production method of the above-mentioned composite semipermeable membrane is described below. The production method includes a forming step of the supporting membrane and a forming step of the separation functional layer.

(2-1) Forming Step of Supporting Membrane

The forming step of the supporting membrane may include a step of coating the porous substrate with the polymer solution, a step of impregnating the porous substrate with the polymer solution and a step of immersing the above-mentioned porous substrate impregnated with the above-mentioned solution, in a coagulation bath in which solubility of the above-mentioned polymer is low compared to a good solvent for the polymer to coagulate the above-mentioned polymer, thereby forming a three-dimensional network structure. Further, the forming step of the supporting membrane may further include a step of dissolving the polymer as the component of the porous supporting layer in a good solvent for that polymer to prepare a polymer solution.

In order to obtain the supporting membrane having the predetermined structure, it is necessary to control the impregnation of the polymer solution in the substrate. Methods for controlling the impregnation of the polymer solution in the substrate include, for example, a method of controlling the time until immersed in a non-solvent, after the polymer solution is applied on the substrate, or a method of adjusting the viscosity by controlling the temperature or concentration of the polymer solution. It is also possible to combine these production methods.

The time until immersed in the coagulation bath, after the polymer solution is applied on the substrate, is preferably within a range between 0.8 and 5 seconds. When the time until immersed in the coagulation bath is within this range, the polymer-containing organic solvent solution is sufficiently impregnated among the fibers of the substrate, and thereafter solidified. As a result, the porous supporting layer can be strongly bonded to the substrate by an anchor effect. Incidentally, the preferred range of the time until immersed in the coagulation bath may be appropriately adjusted depending on the viscosity of the polymer solution used or the like.

When the polymer solution A for forming the first layer contains polysulfone as a material of the porous supporting layer, the polysulfone concentration of the polymer solution A (namely, the solid concentration a) is 12% by weight or more, and more preferably 13% by weight or more. Further, the polysulfone concentration of the polymer solution A is 18% by weight or less, and more preferably 15% by weight or less. When the polymer concentration is 12% by weight or more, continuous pores are formed relatively small. Accordingly, the desired pore size is easily obtained. Further, when the polymer concentration is 18% by weight or less, phase separation can sufficiently proceed before the coagulation of the polymer. Accordingly, the porous structure is easily obtained.

When the polymer solution B also contains polysulfone, the polysulfone concentration of the polymer solution B (namely, the solid concentration b) is 14% by weight or more, and more preferably 15% by weight or more. Further, the polysulfone concentration of the polymer solution B is 30% by weight or less, and more preferably 25% by weight or less. When the polysulfone concentration of the polymer solution B is less than 14% by weight, surface fine pores tend to become large, and the supply amount of monomer becomes excessively large to the monomer retention volume in the second layer at the time of forming the separation functional layer. It becomes therefore difficult to form the projections having a sufficient thickness. Further, when the polysulfone concentration of the polymer solution B exceeds 30% by weight, surface fine pores tend to become small, and the supply rate of monomer becomes low at the time of forming the separation functional layer. As a result, the projections formed become small.

That is to say, the configuration of the projections of the separation functional layer is influenced by the solid concentrations a and b. Then, examples of the constitution for realizing the above-mentioned constitution in the separation functional layer include that a and b satisfy the above-mentioned range.

The solid concentration a and the solid concentration b satisfy a relation a/b of 0.94 or less, and more preferably 0.80 or less, although it is set depending on desired properties of the membrane. Further, the ratio a/b is preferably 0.50 or more, and more preferably 0.65 or more.

When the ratio a/b is 0.94 or less, the number density and height of the projections are precisely controlled to produce the projections having a uniform size, thereby allowing high salt removal performance and water permeability to be compatible with each other. On the other hand, when a/b is 0.5 or more, missing parts (defects) of the porous supporting layer become difficult to occur. Accordingly, stable membrane performance can be obtained.

Further, it is more preferred that the solid concentration a and the solid concentration b satisfy the above-mentioned relation while satisfying the respective preferred numerical value ranges described above.

The temperature of the polymer solution at the time of applying the polymer solution may be usually within a range of from 10 to 60°C, when polysulfone is used. Within this range, the polymer-containing organic solvent solution is sufficiently impregnated among the fibers of the substrate, and thereafter solidified, without precipitation of the polymer solution. As a result, the supporting membrane can be strongly bonded to the substrate by an anchor effect, and the

supporting membrane of the invention can be obtained. Incidentally, the preferred temperature range of the polymer solution may be appropriately adjusted depending on the viscosity of the polymer solution used or the like.

In the formation of the supporting membrane, it is preferred that the polymer solution B for forming the second layer is applied at the same time as the polymer solution A for forming the first layer is applied on the substrate. When the curing time is provided after the application of the polymer solution A, a high-density skin layer is formed on a surface of the first layer formed by phase separation of the polymer solution A, and drastically reduces the permeation flow rate. It is therefore important to apply the polymer solution B at the same time to the extent that the polymer solution A does not form the high-density skin layer by phase separation. For example, "applied at the same time" includes a state where the polymer solution A is in contact with the polymer solution B before arrival thereof to the substrate, that is to say, a state where when the polymer solution A is applied on the substrate, the polymer solution B has been applied on the polymer solution A.

Although the application of the polymer solution on the substrate can be performed by various coating methods, pre-measuring coating methods such as die coating, slide coating and curtain coating that can supply a precise amount of a coating solution are preferably applied. Further, in the formation of the porous supporting layer having the multilayer structure of the invention, a double slit die method is more preferably used in which the polymer solution for forming the first layer and the polymer solution for forming the second layer are applied at the same time.

In addition, the resins contained in the polymer solution A and the polymer solution B may be the same or different from each other. Various characteristics such as strength characteristics, permeation characteristics and surface characteristics of the supporting membrane to be produced can be appropriately adjusted in a wider range.

Incidentally, the solvents contained in the polymer solution A and the polymer solution B may be the same or different, as long as they are good solvents for the polymers. Taking into consideration strength characteristics of the supporting membrane to be produced and impregnation of the polymer solution into the substrate, adjustment can be performed in a wider range.

The good solvent of the invention is one that dissolves a polymer material. Examples of the good solvents include N-methyl-2-pyrrolidone (NMP); tetrahydrofuran; dimethyl sulfoxide; amides such as tetramethylurea, dimethylacetamide and dimethylformamide; lower alkyl ketones such as acetone and methyl ethyl ketone; esters and lactones such as trimethyl phosphate and $\gamma$-butyrolactone; and mixed solvents thereof.

Examples of the non-solvents for the above-mentioned resins include water, aliphatic hydrocarbons, aromatic hydrocarbons and aliphatic alcohols such as hexane, pentane, benzene, toluene, methanol, ethanol, trichloroethylene, ethylene glycol, diethylene glycol, triethylene glycol, propylene glycol, butylene glycol, pentanediol, hexanediol and low-molecular-weight polyethylene glycol or mixed solvents thereof.

Further, the above-mentioned polymer solution may contain an additive for controlling the pore size, porosity, hydrophilicity, elastic modulus or the like of the supporting membrane. As the additives for controlling the pore size and porosity, there are exemplified water, alcohols, water-soluble polymers such as polyethylene glycol, polyvinylpyrrolidone, polyvinyl alcohol and polyacrylic acid, or salts thereof, further inorganic salts such as lithium chloride, sodium chloride, calcium chloride and lithium nitrate, formaldehyde, formamide and the like. However, they are not limited thereto. The additives for controlling the hydrophilicity and elastic modulus include various surfactants.

As the coagulation bath, water is usually used. However, it may be any as long as it does not dissolve the polymer. The membrane configuration of the supporting membrane varies according to the composition, and the membrane-forming properties of the composite membrane also vary thereby. Further, the temperature of the coagulation bath is preferably from -20 to 100°C, and more preferably from 10 to 30°C. When it is higher than this range, vibration of a surface of the coagulation bath becomes violent by thermal motions, and smoothness of a surface of the membrane after the membrane formation is liable to deteriorate. Conversely, when it is too low, the coagulation rate is decreased to cause a problem in membrane-forming properties.

Then, the supporting membrane obtained under such preferred conditions is subjected to hot water cleaning in order to remove the membrane-forming solvent remaining in the membrane. The temperature of hot water at this time is preferably from 50 to 100°C, and more preferably from 60 to 95°C. When it is higher than this range, the degree of contraction of the supporting membrane is increased to reduce water permeability. Conversely, when it is low, a cleaning effect is small.

(2-2) Forming Step of Separation Functional Layer

Description will be made below with the formation of a layer mainly composed of a polyamide, as one example of the forming step of the separation functional layer constituting the composite semipermeable membrane. In the forming step of the polyamide separation functional layer, a polyamide skeleton can be formed by performing interfacial polycondensation on a surface of the supporting membrane using an aqueous solution containing the above-mentioned multifunctional amine and a water-immiscible organic solvent solution containing the multifunctional acyl halide.

The concentration of the multifunctional amine in the multifunctional amine aqueous solution is preferably within

a range of from 0.1% to 20% by weight, and more preferably within a range of from 0.5% to 15% by weight. Within this range, sufficient water permeability and removal performance of salt and boron can be obtained. The multifunctional amine aqueous solution may contain a surfactant, an organic solvent, an alkaline compound, an antioxidant and the like, as long as they do not inhibit a reaction of the multifunctional amine with the multifunctional acyl halide. The surfactant has effects of improving wettability of the supporting membrane surface and decreasing interfacial tension between the amine aqueous solution and a non-polar solvent. The organic solvent sometimes acts as a catalyst of the interfacial polycondensation reaction, and the interfacial polycondensation can be efficiently performed by addition thereof in some cases.

In order to perform the interfacial polycondensation on the supporting membrane, first, the above-mentioned multifunctional amine aqueous solution is brought into contact with the supporting membrane. The contact is preferably performed uniformly and continuously on the supporting membrane surface. Specific examples thereof include a method of coating the supporting membrane with the multifunctional amine aqueous solution and a method of immersing the supporting membrane in the multifunctional amine aqueous solution. The contact time of the supporting membrane with the multifunctional amine aqueous solution is preferably within a range of from 5 seconds to 10 minutes, and more preferably within a range of from 10 seconds to 3 minutes.

After the multifunctional amine aqueous solution is brought into contact with the supporting membrane, liquid removal is thoroughly performed so that liquid droplets do not remain on the membrane. By thoroughly performing liquid removal, it can be prevented that liquid droplet remaining portions become defects after the formation of the composite semipermeable membrane to deteriorate removal performance of the composite semipermeable membrane. As a method of liquid removal, there can be used, for example, a method of vertically holding the supporting membrane after brought into contact with the multifunctional amine aqueous solution to remove an excess of the aqueous solution by gravity flow, as described in JP-A-2-78428, a method of spraying a stream such as nitrogen from an air nozzle to forcibly perform liquid removal, or the like. Further, it is also possible to partially remove water of the aqueous solution by drying the membrane surface after liquid removal.

Then, the water-immiscible organic solvent solution containing the multifunctional acyl halide is brought into contact with the supporting membrane after the contact with the multifunctional amine aqueous solution to form the cross-linked polyamide separation functional layer by the interfacial polycondensation.

The concentration of the multifunctional acyl halide in the water-immiscible organic solvent solution is preferably within a range of from 0.01% to 10% by weight, and more preferably within a range of from 0.02% to 2.0% by weight. When the concentration of the multifunctional acyl halide is 0.01% by weight or more, a sufficient reaction rate is obtained. Further, when it is 10% by weight or less, the occurrence of side reactions can be suppressed. Furthermore, when an acylation catalyst such as DMF is allowed to be contained in this organic solvent solution, the interfacial polycondensation is promoted. This is therefore further preferred.

The water-immiscible organic solvent is desirably one that dissolves the multifunctional acyl halide and does not damage the supporting membrane, and may be any as long as it is inactive to the multifunctional amine compound and the multifunctional acyl halide. Preferred examples thereof include hydrocarbon compounds such as hexane, heptane, octane, nonane and decane.

A method for bringing the organic solvent solution containing the multifunctional acyl halide into contact with the supporting membrane may be performed in a manner similar to the method for coating the supporting membrane with the multifunctional amine aqueous solution.

In the interfacial polycondensation step of the invention, it is vital that the supporting membrane is fully covered with the cross-linked polyamide thin membrane, and that the water-immiscible organic solvent solution containing the multifunctional acyl halide, which has been brought into contact, is allowed to remain on the supporting membrane. For this reason, the time to perform the interfacial polycondensation is preferably from 0.1 seconds to 3 minutes, and more preferably from 0.1 seconds to 1 minute. When the time to perform the interfacial polycondensation is from 0.1 seconds to 3 minutes, the supporting membrane can be fully covered with the cross-linked polyamide thin membrane, and the organic solvent solution containing the multifunctional acyl halide can be held on the supporting membrane.

After the polyamide separation functional layer is formed on the supporting membrane by the interfacial polycondensation, an excess of the solvent is removed by liquid removal. As a method of liquid removal, there can be used, for example, a method of vertically holding the membrane to remove an excess of the organic solvent by gravity flow. In this case, the time to vertically hold the membrane is preferably from 1 to 5 minutes, and more preferably from 1 to 3 minutes. When it is too short, the separation functional layer is not completely formed, and when it is too long, the organic solvent is overdried to cause the occurrence of defects in the polyamide separation functional layer, resulting in deterioration of membrane performance.

3. Use of Composite Semipermeable Membrane

The composite semipermeable membrane is wound around a cylindrical collecting pipe perforated with a number

of holes, together with a raw water spacer such as a plastic net, a permeate spacer such as tricot and a film for increasing pressure resistance as needed, and suitably used as a spiral type composite semipermeable membrane element. Further, the elements are connected in series or in parallel and housed in a pressure vessel, thereby also being able to constitute a composite semipermeable membrane module.

Further, the above-mentioned composite semipermeable membrane, the element thereof or the module can constitute a fluid separation apparatus in combination with a pump for supplying raw water thereto, a device for pretreating the raw water and the like. The raw water is separated into permeate such as drinking water and concentrate not permeated through the membrane by using this separation apparatus, thereby being able to obtain water that meets with the purpose.

The higher operation pressure of the fluid separation apparatus improves salt removal performance. However, in view of an increase in energy necessary for operation and durability of the composite semipermeable membrane, the operation pressure at the time when water to be treated is permeated in the composite semipermeable membrane is preferably from 1.0 MPa to 10 MPa. When the temperature of feed water rises, salt removal performance is deteriorated. However, as the temperature drops, the membrane permeation flux is also decreased. It is therefore preferably from 5 to 45°C. Further, when the pH of feed water increases, there is a concern that scale of magnesium and the like occurs, in the case of highly salt-concentrated feed water such as seawater, and deterioration of the membrane by high-pH operation is of concern. Accordingly, operation in a neutral region is preferred.

Examples of the raw water to be treated with the composite semipermeable membrane include liquid mixtures containing 500 mg/L to 100 g/L of TDS (total dissolved solids), such as seawater, brackish water and discharged water. In general, TDS means the total dissolved solid content, and is indicated by "mass/volume" or "weight ratio", assuming 1 L as 1 kg. According to the definition, it can be calculated from the weight of residues obtained by evaporating a solution filtered through a 0.45-μm filter, at a temperature of 39.5 to 40.5°C, but more simply, it is converted from the practical salinity.

EXAMPLES

The invention is described in further detail below with reference to examples. However, the invention should not be construed as being limited by these examples in any way.

<Preparation of Semipermeable Membrane>

(Example 1)

A DMF solution containing 13% by weight of polysulfone (a polymer solution A) and a DMF solution containing 20% by weight of polysulfone (a polymer solution B) were prepared by keeping mixtures of respective solvents and solutes under heating at 90°C for 2 hours with stirring.

The polymer solutions prepared were each cooled to room temperature, and supplied to separate extruders, followed by high-accuracy filtering. Thereafter, the polymer solutions filtered were concurrently cast on a long-fiber non-woven fabric (fiber diameter: 1 dtex, thickness: about 90 μm, air permeability: 1.3 $cc/cm^2/sec$) composed of polyethylene terephthalate fibers, through a double slit die, to a thickness of 110 μm for the polymer solution A and to a thickness of 90 μm for the polymer solution B, followed by immersion in pure water after 2.8 seconds and cleaning for 5 minutes, thereby obtaining a supporting membrane.

After the resulting supporting membrane was immersed in a 4.0% by weight aqueous solution of m-PDA for 2 minutes, it was slowly pulled up in such a manner that a membrane surface becomes vertical. Nitrogen was sprayed from an air nozzle to remove an excess of the aqueous solution from the surface of the supporting membrane, and thereafter, a n-decane solution of 25°C containing 0.12% by weight of trimesoyl chloride was applied in such a manner that the membrane surface was completely wetted. After still standing for 1 minute, in order to remove an excess of the solution from the membrane, the membrane surface was held vertically for 1 minute to perform liquid removal. Thereafter, cleaning was performed with water of 45°C for 2 minutes to obtain a composite semipermeable membrane provided with a substrate, a porous supporting layer and a polyamide separation functional layer.

(Example 2)

A composite semipermeable membrane was obtained in the same manner as in Example 1 except for using a DMF solution containing 15% by weight of polysulfone as the polymer solution A.

(Example 3)

A composite semipermeable membrane was obtained in the same manner as in Example 1 except for using a DMF solution containing 25% by weight of polysulfone as the polymer solution B.

(Example 4)

A composite semipermeable membrane was obtained in the same manner as in Example 1 except for changing to concurrent casting of the polymer solution A and the polymer solution B to a thickness of 150 μm and a thickness of 50 μm, respectively.

(Example 5)

A composite semipermeable membrane was obtained in the same manner as in Example 1 except for using an NMP solution containing 13% by weight of polysulfone as the polymer solution A and an NMP solution containing 20% by weight of polysulfone as the polymer solution B.

(Example 6) - not according to the invention

A composite semipermeable membrane was obtained in the same manner as in Example 1 except for using a DMF solution containing 17% by weight of polysulfone as the polymer solution A and a DMF solution containing 18% by weight of polysulfone as the polymer solution B.

(Example 7)

A composite semipermeable membrane was obtained in the same manner as in Example 1 except for using a DMF solution containing 15% by weight of polysulfone as the polymer solution A and a DMF solution containing 25% by weight of polysulfone as the polymer solution B.

(Example 8) - not according to the invention

A composite semipermeable membrane was obtained in the same manner as in Example 1 except for using a short-fiber non-woven fabric having a fiber diameter of 1 dtex, a thickness of about 90 μm and an air permeability of 0.7 $cc/cm^2/sec$ as the substrate.

(Example 9) - not according to the invention

A composite semipermeable membrane was obtained in the same manner as in Example 1 except for immersion in pure water after 0.2 seconds after the polymer solution was cast on the long-fiber non-woven fabric.

(Example 10)

A composite semipermeable membrane was obtained in the same manner as in Example 1 except for immersion in pure water after 7 seconds after the polymer solution was cast on the long-fiber non-woven fabric.

(Comparative Example 1)

A supporting membrane was obtained by the same procedure as in Example 1 except for applying only the DMF solution containing 20% by weight of polysulfone on the non-woven fabric to a thickness of 200 μm, using a single slit die instead of the double slit die. The separation functional layer was formed on the resulting supporting membrane by the same procedure as in Example 1 to obtain a composite semipermeable membrane.

(Comparative Example 2)

A composite semipermeable membrane was obtained in the same manner as in Comparative Example 1 except for using a DMF solution containing 15% by weight of polysulfone as the polymer solution.

(Comparative Example 3)

A composite semipermeable membrane was obtained in the same manner as in Comparative Example 1 except for using an NMP solution containing 15% by weight of polysulfone as the polymer solution.

(Comparative Example 4)

A composite semipermeable membrane was obtained in the same manner as in Example 1 except for using a DMF solution containing 20% by weight of polysulfone as the polymer solution A and a DMF solution containing 13% by weight of polysulfone as the polymer solution B.

(Comparative Example 5)

A composite semipermeable membrane was obtained in the same manner as in Example 1 except for using a DMF solution containing 18% by weight of polysulfone as the polymer solution A and a DMF solution containing 17% by weight of polysulfone as the polymer solution B.

(Comparative Example 6)

A supporting membrane was obtained by the same procedure as in Comparative Example 1 except for using a DMF solution containing 18% by weight of polysulfone as the polymer solution.

An aqueous solution containing 3.0% by weight of m-PDA, 0.15% by weight of sodium lauryl sulfate, 3.0% by weight of triethylamine and 6.0% by weight of camphorsulfonic acid was applied on the resulting supporting membrane. After still standing for 1 minute, in order to remove an excess of the solution from the membrane, a membrane surface was held vertically for 2 minutes to perform liquid removal, and nitrogen was sprayed from an air nozzle to remove an excess of the aqueous solution from the surface of the supporting membrane. Thereafter, a hexane solution of 25°C containing 0.20% by weight of trimesoyl chloride was applied in such a manner that the membrane surface was completely wetted. After still standing for 1 minute, in order to remove an excess of the solution from the membrane, the membrane surface was held vertically for 1 minute to perform liquid removal, and thereafter, the membrane was held in a hot air dryer of 120°C for 3 minutes to form a separation functional layer, thus obtaining a composite semipermeable membrane in Comparative Example 6.

(Comparative Example 7)

A supporting membrane was obtained by the same procedure as in Comparative Example 1 except for using a DMF solution containing 17% by weight of polysulfone as the polymer solution.

An aqueous solution containing 3.0% by weight of m-PDA was applied on the resulting supporting membrane. After still standing for 1 minute, in order to remove an excess of the solution from the membrane, a membrane surface was held vertically for 2 minutes to perform liquid removal, and nitrogen was sprayed from an air nozzle to remove an excess of the aqueous solution from the surface of the supporting membrane. Thereafter, an Isopar L (manufactured by Exxon Mobile Corp.) solution of 25°C containing 0.13% by weight of trimesoyl chloride was sprayed in such a manner that the membrane surface was completely wetted. After still standing for 1 minute, in order to remove an excess of the solution from the membrane, the membrane surface was held vertically for 1 minute to perform liquid removal, and thereafter, a composite semipermeable membrane was obtained through cleaning with water of room temperature.

(Comparative Example 8)

A DMF solution containing 13% by weight of polysulfone was applied on the non-woven fabric to a thickness of 110 μm, and after that, the monolayer supporting membrane was obtained by the same procedure as in Comparative Example 1. Thereafter, a DMF solution containing 20% by weight of polysulfone was applied on a supporting layer of the supporting membrane to a thickness of 90 μm, and a two-layer supporting membrane was obtained through the same procedure as in Comparative Example 1 again. The separation functional layer was formed on the resulting two-layer supporting membrane by the same procedure as in Example 1 to obtain a composite semipermeable membrane.

<Measurement of Number Density, Height and Standard Deviation of Projections>

A composite semipermeable membrane sample was embedded with an epoxy resin, and stained with $OsO_4$ in order to facilitate cross-section observation. This was cut with an ultramicrotome to prepare 10 ultrathin sections. With

respect to the resulting ultrathin sections, cross-sectional photographs were taken by a transmission electron microscope. The accelerating voltage at the time of observation was 100 kV, and the observation magnification was 10,000 times. With respect to the resulting cross-sectional photographs, the number of projections in a distance of 2.0 μm in length was measured using a scale, and the 10-point average surface roughness was calculated as described above. Based on this 10-point average surface roughness, portions having a height equivalent to or higher than 1/5 of the 10-point average surface roughness were taken as projections, and the number thereof was counted. The average number density of the projections of the separation functional layer was determined. Further, the height of all projections in the cross-sectional photograph was measured with a scale, the average height of the projections was determined, and the standard deviation thereof was calculated.

<Salt Removal Performance (TDS Removal Ratio)>

Seawater (corresponding to feed water) having a temperature of 25°C and a pH of 6.5 was supplied to the composite semipermeable membrane under a pressure of 5.5 MPa, thereby performing filtration treatment for 24 hours. The resulting permeate was used for measurement of salt removal performance.

The practical salinity was obtained by measuring the electric conductivity of the feed water and the permeate with a conductance meter manufactured by Toa Denpa Kogyo Co., Ltd. The salt removal performance, namely the TDS removal ratio, was determined from the TDS concentration obtained by converting this practical salinity by the following equation:

$$\text{TDS removal ratio (\%)} = 100\times\{1-(\text{TDS concentration in permeate}/\text{TDS concentration in feed water})\}$$

<Membrane Permeation Flux>

The amount of permeate obtained by the above-mentioned filtration treatment for 24 hours was represented as the membrane permeation flux ($m^3/m^2$/day) by the amount of permeate (cubic meters) per day and per square meter of the membrane surface.

The results of the above are shown in Table 1. These results indicate that the composite semipermeable membranes in which high salt removal performance and water permeability are compatible with each other are obtained by the invention.

Table 11

| | Polymer Solution | | Supporting Membrane | | Separation functional layer | | | Composite Semipermeable Membrane Performance (@5.5 MPa) | |
|---|---|---|---|---|---|---|---|---|---|
| | Solid Concentration A | Solid Concentration B | Impreg - nation | Void Occupancy | Projection Average Number Density | Projection Average Height | Standard Deviation | TDS Removal Ratio | Permeation Flux |
| | (wt%) | (wt%) | (wt%) | (%) | (projections/μm) | (nm) | (nm) | (%) | ($m^3/m^2/day$) |
| Ex. 1 | 13 | 20 | 26 | 4.4 | 12.0 | 113 | 85 | 99.7 | 1.24 |
| Ex. 2 | 15 | 20 | 18 | 3.4 | 11.8 | 105 | 87 | 99.7 | 1.15 |
| Ex.3 | 13 | 25 | 22 | 3.1 | 15.2 | 116 | 80 | 99.8 | 1.40 |
| Ex. 4 | 13 | 20 | 25 | 4.3 | 12.2 | 133 | 86 | 99.8 | 1.60 |
| Ex. 5 | 13 | 20 | 15 | 2.6 | 11.7 | 110 | 88 | 99.7 | 1.26 |
| Ex. 6 | 17 | 18 | 6 | 3.2 | 10.3 | 100 | 82 | 99.7 | 1.05 |
| Ex. 7 | 15 | 25 | 20 | 3.7 | 14.8 | 105 | 83 | 99.7 | 1.09 |
| Ex. 8 | 13 | 20 | 14 | 6.3 | 10.1 | 103 | 90 | 99.7 | 1.00 |
| Ex. 9 | 13 | 20 | 5 | 21 | 11.8 | 124 | 98 | 99.6 | 1.32 |
| Ex. 10 | 13 | 20 | 59 | 2.7 | 12.7 | 101 | 92 | 97.9 | 1.28 |
| Comp. Ex. 1 | 20 | - | 5 | 8.5 | 12.0 | 71 | 92 | 99.8 | 0.50 |
| Comp. Ex. 2 | 15 | - | 26 | 7.4 | 9.8 | 101 | 89 | 99.7 | 1.00 |
| Comp. Ex. 3 | 15 | - | 12 | 5.2 | 9.5 | 99 | 89 | 99.6 | 0.96 |
| Comp. Ex. 4 | 20 | 13 | 4 | 1.2 | 7.0 | 67 | 102 | 99.3 | 0.60 |
| Comp. Ex. 5 | 18 | 17 | 5 | 2.3 | 9.8 | 90 | 93 | 99.5 | 0.80 |
| Comp. Ex. 6 | 18 | - | 4 | 2.2 | 10.8 | 97 | 95 | 99.7 | 0.75 |

(continued)

| | Polymer Solution | | Supporting Membrane | | Separation functional layer | | | Composite Semipermeable Membrane Performance (@5.5 MPa) | |
|---|---|---|---|---|---|---|---|---|---|
| | Solid Concentration A | Solid Concentration B | Impreg - nation | Void Occupancy | Projection Average Number Density | Projection Average Height | Standard Deviation | TDS Removal Ratio | Permeation Flux |
| | (wt%) | (wt%) | (wt%) | (%) | (projections/μm) | (nm) | (nm) | (%) | ($m^3/m^2/day$) |
| Comp. Ex. 7 | 17 | - | 5 | 3.1 | 11.0 | 90 | 92 | 99.5 | 0.91 |
| Comp. Ex. 8 | 13 | 20 | 28 | 2.9 | 6.8 | 73 | 85 | 99.7 | 0.55 |

INDUSTRIAL APPLICABILITY

The composite semipermeable membrane of the invention can be suitably used particularly for desalting of brackish water or seawater.

## Claims

1. A composite semipermeable membrane comprising: a supporting membrane having a substrate and a porous supporting layer; and a separation functional layer provided on the supporting membrane,
wherein the separation functional layer contains a polyamide as a main component which is formed by interfacial polycondensation of a multifunctional amine with a multifunctional acyl halide,
wherein the porous supporting layer has a multilayer structure including two layers, a first layer in contact with the substrate and a second layer in contact with the separation functional layer,
wherein the first layer has continuous fine pores and a pore size thereof is from 0.1 μm to 1 μm,
wherein the second layer is formed of a polysulfone including a repeating unit shown in the following chemical formula and has fine pores with a diameter of 1 to 30 nm on the surface thereof,

[Chem. 1]

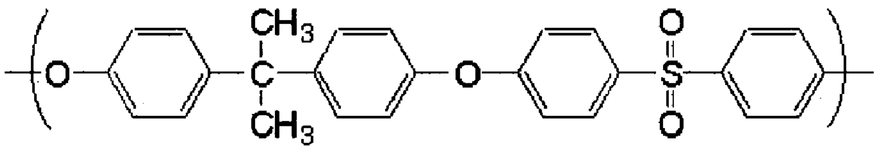

wherein 15% to 50% by weight of the porous supporting layer is impregnated in the substrate, and
wherein, when any 10 cross sections of the composite semipermeable membrane, having a length of 2.0 μm in a membrane surface direction, are observed using an electron microscope, an average number density of projections on the separation functional layer, which have a height equivalent to or higher than 1/5 of a 10-point average surface roughness of the separation functional layer, is 10.0 pieces/μm or more, in each cross section, and an average height of the projections is 100 nm or more.

2. The composite semipermeable membrane according to claim 1, wherein, when the cross sections are observed using the electron microscope, the average number density of the projections is 12.0 pieces/μm or more, in each cross section.

3. The composite semipermeable membrane according to claim 1 or 2, wherein, when the cross sections are observed using the electron microscope, the average height of the projections is 110 nm or more, in each cross section.

4. The composite semipermeable membrane according to any one of claims 1 to 3, wherein a standard deviation the height of the projections in one of the cross sections is 90 nm or less.

5. The composite semipermeable membrane according to any one of claims 1 to 4, wherein the porous supporting layer has a multilayer structure of a first layer on a substrate side and a second layer formed thereon.

6. The composite semipermeable membrane according to claim 5, wherein an interface between the first layer and the second layer has a continuous structure.

7. The composite semipermeable membrane according to claim 5 or 6, wherein the porous supporting layer is formed by applying a polymer solution A for forming the first layer and a polymer solution B for forming the second layer on the substrate at the same time, and thereafter bringing them into contact with a coagulation bath to perform phase separation.

**8.** The composite semipermeable membrane according to claim 7, wherein the polymer solution A and the polymer solution B are different from each other in composition.

**9.** The composite semipermeable membrane according to claim 8, wherein a solid concentration a (wt%) of the polymer solution A and a solid concentration b (wt%) of the polymer solution B satisfy a relation a/b ≤ 0.94.

**10.** The composite semipermeable membrane according to any one of claims 1 to 9, wherein the substrate of the supporting membrane is a long-fiber non-woven fabric containing a polyester as a main component.

**11.** A method for producing a composite semipermeable membrane according to any of claims 1 to 10, said method comprising the following steps:

- forming step of supporting membrane:

(a1) applying a polymer solution A on a substrate, wherein a solid concentration a (wt%) of the polymer solution A is 12% by weight to 18% by weight;
(a2) applying a polymer solution B on the polymer solution A, wherein a solid concentration b (wt%) of the polymer solution B is 14% by weight to 30% by weight, and wherein the solid concentration a (wt%) of the polymer solution A and the solid concentration b (wt%) of the polymer solution B satisfy a relation a/b ≤ 0.94;
(b) impregnating the polymer solution in the substrate and thereafter bringing the polymer solution into contact with a coagulation bath, thereby forming a porous supporting layer in which 15 to 50% by weight thereof is impregnated in the substrate, by phase separation; and

- forming step of separation functional layer by an interfacial polycondensation including:

(c1) bringing a multifunctional amine aqueous solution into contact with the supporting membrane;
(c2) bringing a multifunctional acyl halide solution into contact with the supporting membrane after (c1).

**12.** The method for producing a composite semipermeable membrane according to claim 11, wherein the step (a) comprises applying a polymer solution A and a polymer solution B on the substrate at the same time.

**Patentansprüche**

**1.** Semipermeable Verbundmembran, umfassend: eine Trägermembran mit einem Substrat und einer porösen Trägerschicht; und eine Trennfunktionsschicht, die auf der Trägermembran vorgesehen ist,
wobei die Trennfunktionsschicht ein Polyamid als Hauptkomponente enthält, das durch Grenzflächenpolykondensation eines multifunktionellen Amins mit einem multifunktionellen Acylhalogenid gebildet ist;
wobei die poröse Trägerschicht eine Mehrschichtstruktur hat, die zwei Schichten umfasst, eine erste Schicht in Kontakt mit dem Substrat und eine zweite Schicht in Kontakt mit der Trennfunktionsschicht;
wobei die erste Schicht kontinuierliche feine Poren hat und eine Porengröße davon 0,1 μm bis 1 μm beträgt;
wobei die zweite Schicht aus einem Polysulfon mit einer sich wiederholenden Einheit gebildet ist, die in der folgenden chemischen Formel gezeigt ist, und feine Poren mit einem Durchmesser von 1 bis 30 nm auf ihrer Oberfläche hat;

[Chem. 1]

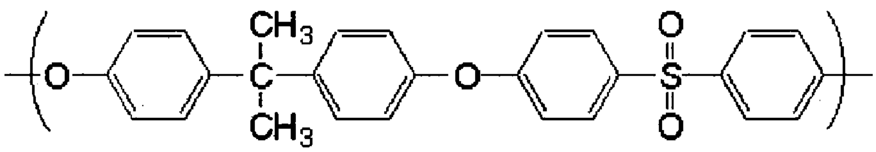

wobei 15 bis 50 Gew.-% der porösen Trägerschicht in das Substrat imprägniert sind; und
wobei, wenn beliebige 10 Querschnitte der semipermeablen Verbundmembran mit einer Länge von 2,0 μm in einer Membranoberflächenrichtung unter Verwendung eines Elektronenmikroskops beobachtet werden, eine durchschnittliche Zahldichte von Vorsprüngen auf die Trennfunktionsschicht, die eine Höhe haben, die äquivalent zu oder höher ist als 1/5 einer 10-Punkt-Durchschnittsoberflächenrauheit der Trennfunktionsschicht, 10,0 Stück/μm oder

mehr beträgt, in jedem Querschnitt, und eine durchschnittliche Höhe der Vorsprünge 100 nm oder mehr beträgt.

**2.** Semipermeable Verbundmembran nach Anspruch 1, wobei, wenn die Querschnitte unter Verwendung des Elektronenmikroskops beobachtet werden, die durchschnittliche Zahldichte der Vorsprünge, in jedem Querschnitt, 12 Stück/μm oder mehr beträgt.

**3.** Semipermeable Verbundmembran nach Anspruch 1 oder 2, wobei, wenn die Querschnitte unter Verwendung des Elektronenmikroskops beobachtet werden, die durchschnittliche Höhe der Vorsprünge, in jedem Querschnitt, 110 nm oder mehr beträgt.

**4.** Semipermeable Verbundmembran nach einem der Ansprüche 1 bis 3, wobei eine Standardabweichung der Höhe der Vorsprünge in einem der Querschnitte 90 nm oder weniger beträgt.

**5.** Semipermeable Verbundmembran nach einem der Ansprüche 1 bis 4, wobei die poröse Trägerschicht eine Mehrschichtstruktur aus einer ersten Schicht auf einer Substratseite und einer darauf gebildeten zweiten Schicht hat.

**6.** Semipermeable Verbundmembran nach Anspruch 5, wobei eine Grenzfläche zwischen der ersten Schicht und der zweiten Schicht eine kontinuierliche Struktur hat.

**7.** Semipermeable Verbundmembran nach Anspruch 5 oder 6, wobei die poröse Trägerschicht durch Aufbringen einer Polymerlösung A zum Bilden der ersten Schicht und einer Polymerlösung B zum Bilden der zweiten Schicht auf dem Substrat zur selben Zeit, und anschließendes Inkontaktbringen dieser mit einem Koagulationsbad, um eine Phasentrennung durchzuführen, gebildet ist.

**8.** Semipermeable Verbundmembran nach Anspruch 7, wobei sich die Polymerlösung A und die Polymerlösung B in ihrer Zusammensetzung voneinander unterscheiden.

**9.** Semipermeable Verbundmembran nach Anspruch 8, wobei eine Feststoffkonzentration a (Gew.-%) der Polymerlösung A und eine Feststoffkonzentration b (Gew.-%) der Polymerlösung B eine Beziehung $a/b \leq 0{,}94$ erfüllen.

**10.** Semipermeable Verbundmembran nach einem der Ansprüche 1 bis 9, wobei das Substrat der Trägermembran ein langfaseriges Vlies ist, das einen Polyester als Hauptkomponente enthält.

**11.** Verfahren zur Herstellung einer semipermeablen Verbundmembran nach einem der Ansprüche 1 bis 10, wobei das Verfahren die folgenden Schritte umfasst:

- Schritt der Bildung der Trägermembran:

  (a1) Aufbringen einer Polymerlösung A auf ein Substrat, wobei eine Feststoffkonzentration a (Gew.-%) der Polymerlösung A 12 Gew.-% bis 18 Gew.-% beträgt;
  (a2) Aufbringen einer Polymerlösung B auf die Polymerlösung A, wobei eine Feststoffkonzentration b (Gew.-%) der Polymerlösung B 14 Gew.-% bis 30 Gew.-% beträgt, und wobei die Feststoffkonzentration a (Gew.-%) der Polymerlösung A und die Feststoffkonzentration b (Gew.-%) der Polymerlösung B eine Beziehung $a/b \leq 0{,}94$ erfüllen;
  (b) Imprägnieren der Polymerlösung in das Substrat und anschließendes Inkontaktbringen der Polymerlösung mit einem Koagulationsbad, wodurch eine poröse Trägerschicht, in der 15 bis 50 Gew.-% davon in das Substrat imprägniert sind, durch Phasentrennung gebildet wird; und

- Schritt der Bildung der Trennfunktionsschicht durch eine Grenzflächenpolykondensation, einschließlich:

  (c1) Inkontaktbringen einer wässrigen multifunktionellen Aminlösung mit der Trägermembran;
  (c2) Inkontaktbringen einer multifunktionellen Acylhalogenidlösung mit der Trägermembran nach (c1).

**12.** Verfahren zur Herstellung einer semipermeablen Verbundmembran nach Anspruch 11, wobei der Schritt (a) das gleichzeitige Aufbringen einer Polymerlösung A und einer Polymerlösung B auf das Substrat umfasst.

## Revendications

1. Membrane semi-perméable composite comprenant: une membrane de support ayant un substrat et une couche de support poreuse ; et une couche fonctionnelle de séparation prévue sur la membrane de support,
dans laquelle la couche fonctionnelle de séparation contient un polyamide en tant que composant principal qui est formé par polycondensation interfaciale d'une amine multifonctionnelle avec un halogénure d'acyle multifonctionnel,
dans laquelle la couche de support poreuse a une structure multicouche comportant deux couches, une première couche en contact avec le substrat et une deuxième couche en contact avec la couche fonctionnelle de séparation,
dans laquelle la première couche a des pores fins continus et une taille de pore de ceux-ci est de 0,1 μm à 1 μm,
dans laquelle la deuxième couche est formée d'un polysulfone comportant une unité de répétition représentée dans la formule chimique suivante et a des pores fins ayant un diamètre allant de 1 à 30 nm sur la surface de celle-ci,

[Chem. 1]

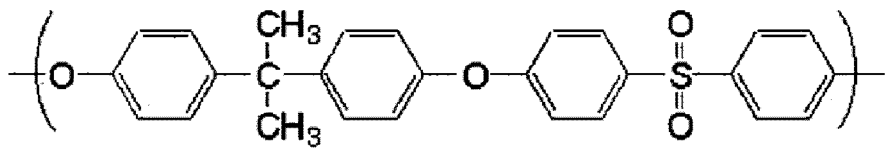

dans laquelle le substrat est imprégné de 15% à 50% en poids de la couche de support poreuse, et
dans laquelle, lorsque 10 sections transversales quelconques de la membrane semi-perméable composite, ayant une longueur de 2,0 μm dans une direction de surface de membrane, sont observées en utilisant un microscope électronique, une densité moyenne en nombre de projections sur la couche fonctionnelle de séparation, qui ont une hauteur équivalente ou supérieure à 1/5 d'une rugosité de surface moyenne en 10 points de la couche fonctionnelle de séparation, est supérieure ou égale à 10,0 pièces/μm, dans chaque section transversale, et une hauteur moyenne des projections est supérieure ou égale à 100 nm.

2. Membrane semi-perméable composite selon la revendication 1, dans laquelle, lorsque les sections transversales sont observées en utilisant le microscope électronique, la densité moyenne en nombre des projections est supérieure ou égale à 12,0 pièces/μm, dans chaque section transversale.

3. Membrane semi-perméable composite selon la revendication 1 ou 2, dans laquelle, lorsque les sections transversales sont observées en utilisant le microscope électronique, la hauteur moyenne des projections est supérieure ou égale à 110 nm, dans chaque section transversale.

4. Membrane semi-perméable composite selon l'une quelconque des revendications 1 à 3, dans laquelle un écart-type de la hauteur des projections dans l'une des sections transversales est inférieur ou égal à 90 nm.

5. Membrane semi-perméable composite selon l'une quelconque des revendications 1 à 4, dans laquelle la couche de support poreuse a une structure multicouche d'une première couche sur un côté substrat et d'une deuxième couche formée sur celle-ci.

6. Membrane semi-perméable composite selon la revendication 5, dans laquelle une interface entre la première couche et la deuxième couche a une structure continue.

7. Membrane semi-perméable composite selon la revendication 5 ou 6, dans laquelle la couche de support poreuse est formée en appliquant une solution de polymère A pour former la première couche et une solution de polymère B pour former la deuxième couche sur le substrat en même temps, puis en les mettant en contact avec un bain de coagulation pour effectuer une séparation de phase.

8. Membrane semi-perméable composite selon la revendication 7, dans laquelle la solution de polymère A et la solution de polymère B sont différentes l'une de l'autre dans la composition.

9. Membrane semi-perméable composite selon la revendication 8, dans laquelle une concentration en matières solides a (% en poids) de la solution de polymère A et une concentration en matières solides b (% en poids) de la solution de polymère B satisfont une relation $a/b \leq 0{,}94$.

**10.** Membrane semi-perméable composite selon l'une quelconque des revendications 1 à 9, dans laquelle le substrat de la membrane de support est un non-tissé à fibres longues contenant un polyester en tant que composant principal.

**11.** Procédé de production d'une membrane semi-perméable composite selon l'une des revendications 1 à 10, ledit procédé comprenant les étapes suivantes :

- une étape formation de membrane de support :

  (a1) l'application d'une solution de polymère A sur un substrat, où une concentration en matières solides a (% en poids) de la solution de polymère A est de 12% en poids à 18% en poids ;
  (a2) l'application d'une solution de polymère B sur la solution de polymère A, où une concentration en matières solides b (% en poids) de la solution de polymère B est de 14% en poids à 30% en poids, et où la concentration en matières solides a (% en poids) de la solution de polymère A et la concentration en matières solides b (% en poids) de la solution de polymère B satisfont une relation $a/b \leq 0,94$ ;
  (b) l'imprégnation du substrat de la solution de polymère et ensuite la mise en contact de la solution de polymère avec un bain de coagulation, formant ainsi une couche de support poreuse où le substrat est imprégné de 15 à 50% en poids de celle-ci, par séparation de phase ; et

- une étape de formation d'une couche fonctionnelle de séparation par polycondensation interfaciale comportant :

  (c1) la mise en contact d'une solution aqueuse d'amine multifonctionnelle avec la membrane de support ;
  (c2) la mise en contact d'une solution d'halogénure d'acyle multifonctionnel avec la membrane de support après (c1).

**12.** Procédé de production d'une membrane semi-perméable composite selon la revendication 11, dans lequel l'étape (a) comprend l'application d'une solution de polymère A et d'une solution de polymère B sur le substrat en même temps.

*Fig. 1*

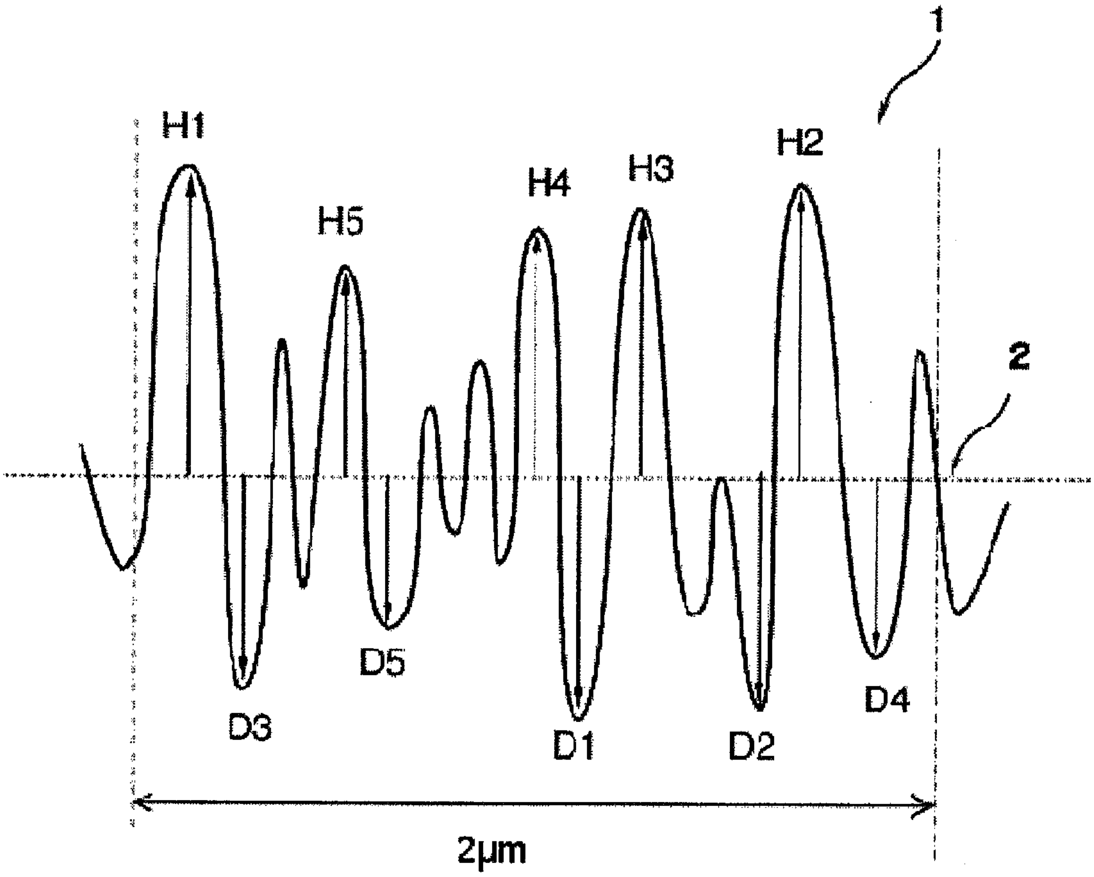

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- EP 1064986 A
- EP 2695670 A
- JP 55014706 A
- JP 5076740 A
- JP 9019630 A
- JP 9085068 A
- JP 2001179061 A
- JP 9141071 A
- JP 2005169332 A
- JP 2078428 A